# EUROPÄISCHE PATENTANMELDUNG

(11) **EP 2 868 865 A1**
(43) Veröffentlichungstag der Anmeldung: **06.05.2015**
(21) Anmeldenummer: 13190979.8
(22) Anmeldetag: 31.10.2013
(51) Int. Cl.: F01D 5/08, F01D 25/12, F02C 7/12

(54) **Gasturbine sowie Verfahren zu deren Kühlung**

(71) Anmelder: Siemens Aktiengesellschaft, 80333 München (DE)
(72) Erfinder: Benkler, Francois, 40880 Ratingen (DE); Braun, Stefan, 47506 Neukirchen-Vluyn (DE); Butzeck, Christopher, 45481 Mülheim (DE); Klumpp, Stephan, 40822 Mettmann (DE); Schirrmacher, Achim, 45663 Recklinghausen (DE); Waltke, Ulrich, 45468 Mülheim an der Ruhr (DE)

(57) **Zusammenfassung**

Die Erfindung betrifft eine Gasturbine sowie ein Verfahren zur Kühlung einer Gasturbine mit einem Gehäuse (1), einer Brennkammer (2) sowie einem Verdichter (3), wobei der Verdichter (3) und die Brennkammer (2) innerhalb des Gehäuses (1) angeordnet sind. Der Verdichter (3) umfasst mehrere Verdichterstufen (4a, 4b), wobei die in Strömungsrichtung hintere Verdichterstufen (4b) einen Hochtemperaturbereich (6) des Verdichters ausbildet. Es sind Kühlmittel (5) vorgesehen, welche zur Kühlung der hinteren Verdichterstufen (4b) ein Fluid von außerhalb des Gehäuses (1) in den Hochtemperaturbereich (6) des Verdichters (3) zuführen.

## Beschreibung

Die vorliegende Erfindung betrifft eine Gasturbine sowie ein Verfahren zur Kühlung einer Gasturbine.

Gasturbinen werden unter anderem in Kraftwerken und als Antriebsaggregate für Flugzeuge verwendet. Um einen möglichst hohen Wirkungsgrad zu erzielen, wird bei Gasturbinen ein möglichst hohes Druckverhältnis zwischen dem Druck an einem Einlass des Verdichters und dem Druck am Austritt des Verdichters angestrebt. Dabei steigt neben dem Druck auch die Temperatur insbesondere im Bereich der hinteren Verdichterscheiben des Verdichters, so dass diese nicht mehr aus kostengünstigen Materialien hergestellt werden können, sondern den Einsatz höherwertiger Werkstoffe verlangen, was die Kosten für den Verdichter erhöht. Alternativ sind Schutzschichten auf der Oberfläche der Verdichterscheiben bekannt, welche jedoch ebenfalls mit hohen Mehrkosten verbunden sind.

Aufgabe der Erfindung ist es, die thermische Belastung auf die hinteren Verdichterscheiben zu reduzieren und somit auf den Einsatz teurer Werkstoffe oder sonstiger kostenintensiver Maßnahmen zu verzichten.

Die erfindungsgemäße Gasturbine mit den Merkmalen des Anspruchs 1 bietet gegenüber den aus dem Stand der Technik bekannten Lösungen den Vorteil, dass eine Kühlung der thermisch hoch belasteten Verdichterstufen durch ein Fluid die thermische Belastung derart reduziert, dass ein hohes Verdichtungsverhältnis erreicht werden kann, wobei auf den Einsatz höherwertiger Werkstoffe verzichtet werden kann und die mechanische und thermische Stabilität mit vergleichsweise einfachen Werkstoffen erreicht wird. Dabei wird ein Fluid zur Kühlung, insbesondere Luft, von außerhalb des Gehäuses in den Hochtemperaturbereich des Verdichters zugeführt.

Durch die in den abhängigen Ansprüchen angeführten Maßnahmen sind vorteilhafte Weiterbildungen und Verbesserungen der im unabhängigen Anspruch angegebenen Gasturbine möglich.

Eine vorteilhafte Weiterbildung besteht darin, dass die Kühlmittel das Fluid sowohl dem Hochtemperaturbereich des Verdichters als auch der Brennkammer und/oder einer der Brennkammer nachgeschalteten Turbine zuführen. Sind bei einer Gasturbine schon Kühlmöglichkeiten für die Brennkammer oder eine Turbine vorgesehen, kann hier ein Teil des Fluidstroms abgezweigt und die Kühlung der hinteren Verdichterstufe einfach und kostengünstig realisiert werden.

Weiterhin ist mit Vorteil vorgesehen, dass mindestens ein Kühlkanal von einem in Strömungsrichtung eines Gases durch die Gasturbine hinter dem Verdichter angeordneten Fluidraum durch Ausnehmungen, insbesondere Bohrungen, in Scheiben, insbesondere in Rotorzwischenscheiben oder in Scheibenträgern des Verdichters verläuft. Durch den Kühlkanal kann das Fluid zur Kühlung zielgerichtet an die thermisch hoch belasteten Stellen des Verdichters geleitet werden, wobei der mindestens eine Kühlkanal eine zusätzliche mechanische Versteifung des Verdichters darstellt. Somit wird nicht nur die thermische Belastung herabgesetzt, sondern gleichzeitig die mechanische Festigkeit erhöht.

Alternativ ist mit Vorteil vorgesehen, dass der Verdichter einen Rotor umfasst, wobei eine Zufuhr des Fluids zur Kühlung der thermisch hoch belasteten Verdichterstufen durch einen Kühlkanal innerhalb des Rotors erfolgt. Die Verdichterscheiben, die die Verdichterschaufeln tragen, sind mit den Rotorzwischenscheiben verbunden. Durch eine Zufuhr des Fluids innerhalb des Rotors kann auf Bohrungen in den Rotorzwischenscheiben oder den Scheibenträgern zur Durchführung von Kühlkanälen verzichtet werden, und der ohnehin vorhandene Hohlraum im Inneren des Rotors dazu genutzt werden.

Besonders vorteilhaft ist dabei, wenn die Zufuhr des Fluids in entgegengesetzter Richtung der Strömungsrichtung des Gases durch den Verdichter erfolgt. Zum einen kann auf diese Weise ein leichter Anschluss an die Kühlmittel realisiert werden, welche der Brennkammer und/oder der Turbine ein Fluid zur Kühlung zuführen. Zum anderen wird auf diese Weise eine sehr effektive Kühlung nach dem Prinzip eines Gegenstrom-Wärmetauschers realisiert, wodurch die Temperatur an den thermisch hoch belasteten Verdichterstufen sinkt.

Eine weitere vorteilhafte Weiterbildung besteht darin, dass ein Fördermittel vorgesehen ist, welches das Fluid zur Kühlung des Verdichters entgegen der Strömungsrichtung des Gases durch den Verdichter der Gasturbine in einen Kühlkanal der Kühlmittel fördert. Durch ein Fördermittel kann das Fluid zur Kühlung auch gegen einen Druck in den Kühlkanal gefördert werden. Dabei ist die einfachste Variante eines Fördermittels eine Scheibe zur Erzeugung von Staudruck, welche in dem Verdichter angeordnet wird, wobei das Fluid durch den Staudruck an der Scheibe in den Kühlkanal gedrückt wird. Alternativ ist mindestens eine Rotorzwischenscheibe vorgesehen, die das Fluid verdichtet und in den Kühlkanal fördert. Alternativ ist vorgesehen, dass das Fördermittel einen Kompressor umfasst, welcher das Fluid mit einem, gegenüber dem in dem Verdichter herrschenden Druck, erhöhten Druck in den Kühlkanal fördert.

Eine weitere vorteilhafte Weiterbildung besteht darin, dass die thermisch höher, bzw. hoch belasteten Verdichterscheiben, auf denen die Verdichterschaufeln fixiert sind, Kühlkanäle aufweisen. Diese Kühlkanäle bestehen aus axial angeordneten Röhren. Durch die axial angeordneten Röhren kann das Kühlfluid aus dem Kühlkanal weiter verzweigt und verteilt werden. Dabei ist es vorteilhaft, wenn radial angeordnete Bohrungen oder Röhren durch die Verdichterscheiben verlaufen, um die thermisch höher und hoch belasteten Bereiche, insbesondere die Scheibennut, gezielt zu kühlen.

Auch vorteilhaft ist dabei, wenn die radial angeordneten Bohrungen und Röhren Austrittsöffnungen in den Strömungskanal aufweisen, durch die das Fluid in den Hochtemperaturbereich an der Nabe des Verdichterrotors austritt. Durch die Positionierung der Öffnungen und den Austritt des Fluids durch Austrittsöffnungen kann die Temperatur lokal an der Nabe abgesenkt werden, so dass die Kühlwirkung verbessert wird.

Zusätzlich oder alternativ zu den Bohrungen kann durch die Rotorzwischenscheiben, welche durch ihren Aufbau als hohl angesehen werden können und/oder durch Bohrungen der Schaufelträger Fluid geführt werden. Auf diese Weise lässt sich die Verzweigung des Kühlkanals und die Zufuhr von Fluid in die bestehenden Bauteile integrieren. Besonders vorteilhaft ist dabei, wenn die Rotorzwischenscheiben mindestens eine Austrittsöffnung für das Fluid aufweisen, so dass die Oberfläche der Verdichterscheiben und/oder der Rotornabe gekühlt ist. Besonders vorteilhaft ist dabei, wenn die Austrittsöffnung auf eine Nut für eine Verdichterschaufel im Nutbereich der Verdichterscheibe gerichtet ist, da es sich hierbei um eine sowohl mechanisch als auch thermisch hoch belastete Stelle im Verdichter handelt und diese thermisch hoch belastete Stelle gezielt gekühlt werden kann.

Im Folgenden werden Ausführungsbeispiele der erfindungsgemäßen Gasturbine anhand der beigefügten Zeichnungen erläutert. Gleiche Bauteile oder Bauteile mit gleicher Funktion sind dabei mit gleichen Bezugszeichen gekennzeichnet.
- FIG 1: zeigt ein erstes Ausführungsbeispiel einer erfindungsgemäßen Gasturbine.

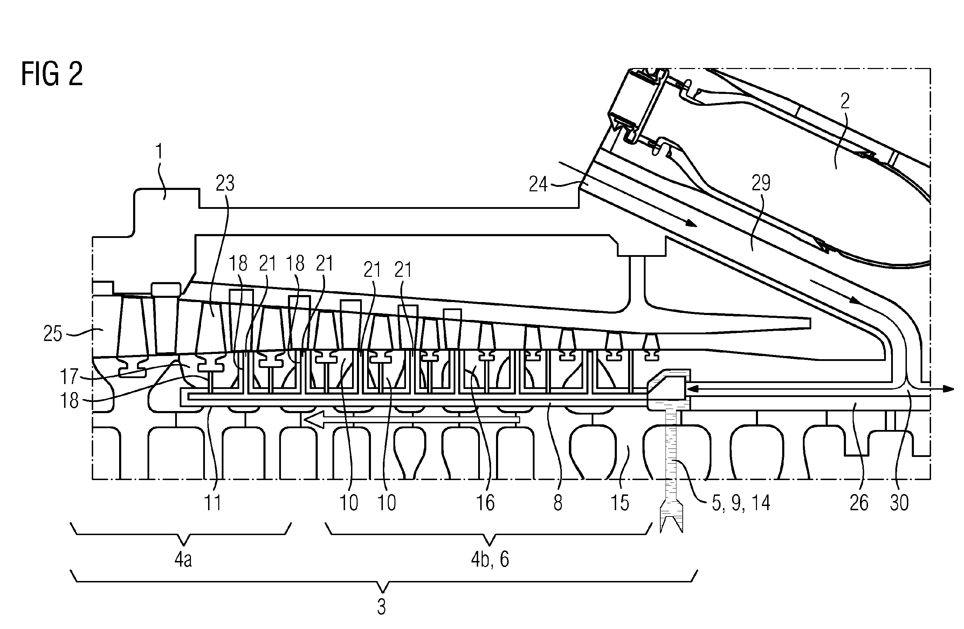

- FIG 2: zeigt ein weiteres Ausführungsbeispiel einer erfindungsgemäßen Gasturbine.
- FIG 3: zeigt eine Rotorzwischenscheibe einer erfindungsgemäßen Gasturbine in der Frontansicht.
- FIG 4: zeigt eine Rotorzwischenscheibe einer erfindungsgemäßen Gasturbine in der Seitenansicht.
- FIG 5: zeigt eine an einem Kühlkanal befestigte und mit dem Kühlkanal fluidisch verbundene Rotorzwischen-scheibe.

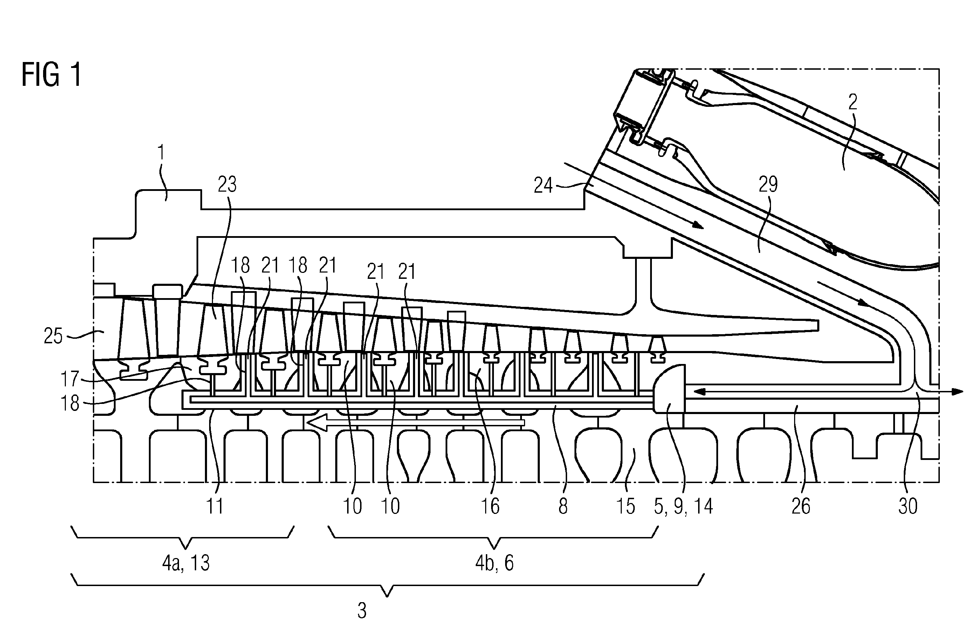

In FIG 1 ist ein Ausführungsbeispiel einer erfindungsgemäßen Gasturbine dargestellt. Die Gasturbine weist ein Gehäuse 1 auf, in dem ein Verdichter 3 und eine Brennkammer 2 angeordnet sind. Das Gehäuse weist ferner eine Einlassöffnung 25 für ein in dem Verdichter 3 zu verdichtendes Gas, insbesondere Luft, und eine Öffnung 24 zur Zufuhr eines Fluids zur Kühlung auf. Dabei kann das Gehäuse 1 sowohl einteilig als auch mehrteilig ausgeführt sein. Der Verdichter 3 weist mehrere Verdichterstufen 4a, 4b auf, wobei jede Verdichterstufe eine Verdichterschaufel 23 umfasst. Die in Strömungsrichtung von der Einlassöffnung 25 in Richtung der Brennkammer 2 hinteren Verdichterstufen 4b bildet einen Hochtemperaturbereich 6 des Verdichters 3 aus, während die in Strömungsrichtung vorderen Verdichterstufen 4a einen Niedertemperaturbereich 13 des Verdichters 3 ausbildet. Von der Öffnung 24 führen Kühlmittel 5 das Fluid in den Bereich der hinteren Verdichterstufen 4b. Die Kühlmittel 5 umfassen in diesem Ausführungsbeispiel einen parallel zu der Brennkammer 2 angeordneten Kanal 29, der von der Öffnung 24 zu einem Verzweigungspunkt 30 führt sowie mindestens einen Kühlkanal 8. Von dem Verzweigungspunkt 30 führt eine erste Verzweigung in Strömungsrichtung des Gases durch die Gasturbine zu einer Turbine 7, sowie eine zweite, entgegen der Strömungsrichtung eines Gases durch die Gasturbine, ausgebildete Verzweigung durch einen Swirler 26 zu einem Fluidraum 9. Von dem Fluidraum 9 führen ein Kühlkanal 8, oder mehrere, bevorzugt über den Umfang verteilte, Kühlkanäle 8 durch die Verdichterscheiben 10 und Rotorzwischenscheiben 16 in den Hochtemperaturbereich 6. In den Verdichterscheiben 10 sind Ausnehmungen 11, insbesondere Bohrungen, vorgesehen, durch welche der Kühlkanal 8 oder die Kühlkanäle 8 gesteckt sind. Dabei können die Kühlkanäle 8 beispielsweise durch Kraftschluss in den Ausnehmungen 11 fixiert sein. Aus zumindest einem Kühlkanal 8 zweigen Röhren 18 oder Bohrungen ab. Die Röhren 18 oder Bohrungen weisen Austrittsöffnungen auf, durch welche das Fluid in den thermisch höher oder hochbelasteten Verdichterstufen 4b weiter verteilbar ist. Ferner sind Fördermittel 14 vorgesehen, welche das Fluid von der Öffnung 24 in den mindestens einen Kühlkanal 8 fördern. In einer Ausführungsform bestehen die Fördermittel 14 lediglich aus einer Schaufelreihe 15, welche das Fluid durch mindestens einen Kühlkanal fördert. Eine weitere Ausführungsform besteht in einer extern angeordneten Pumpe, die das Fluid über die Öffnung 24 in die thermisch höher belasteten Verdichterstufen 4b fördert.

Im Betrieb der Gasturbine wird ein Gas, insbesondere Luft, durch die Einlassöffnung 25 angesaugt und über die Verdichterstufen 4a, 4b des Verdichters 3 verdichtet. Im Laufe des Verdichtungsprozesses erhöht sich die Temperatur des Gases, wodurch sich die thermische Belastung auf die hinteren Verdichterstufen 4b erhöht. Um die thermische Belastung im Bereich der thermisch höher und hochbelasteten Verdichterstufen 4b zu reduzieren, wird ein Fluid, insbesondere Luft oder Luft mit Wassereinspritzung, von außerhalb des Gehäuses 1 der Gasturbine von der Öffnung 24 über den Swirler 26 unterhalb der Brennkammer 2 in Richtung des Fluidraumes 9 geleitet. Von dort aus wird das Fluid dann über den mindestens einen Kühlkanal 8 und durch die Röhren 18, welche durch die Scheiben 10 gesteckt sind, in den Bereich der hinteren Verdichterstufen 4b geführt.

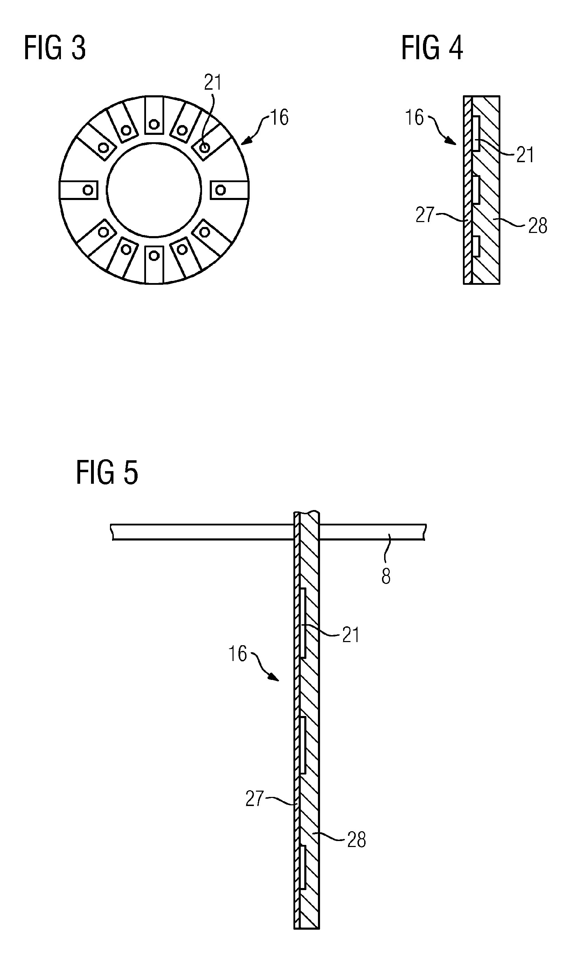

In FIG 3 und FIG 4 ist eine Rotorzwischenscheibe 16 einer erfindungsgemäßen Gasturbine dargestellt. Die Rotorzwischenscheibe 16 weist einen Körper 28 und eine Deckplatte 27 auf, zwischen denen das Fluid in axialer Richtung strömt. Das Fluid wird innerhalb der Rotorzwischenscheibe 16 umgelenkt und strömt dann in radialer Richtung aus den Öffnungen 21 in der Rotorzwischenscheibe 16 aus.

FIG 5 zeigt die Kanalverbindung zwischen dem mindestens einen Kühlkanal 8 und einer Rotorzwischenscheibe 16. Der Kühlkanal ist dabei an der Rotorzwischenscheibe 16 fixiert und weist eine Deckplatte 27 und einen Körper 28 sowie drei seitliche Austrittsöffnungen 21 auf.

In einer alternativen Ausführungsform der erfindungsgemäßen Gasturbine ist vorgesehen, dass mindestens ein Kühlkanal 8 im Inneren eines Rotors 12 des Verdichters verläuft. Dabei erfolgt eine Zufuhr des Fluids zur Kühlung der thermisch höher oder hoch belasteten Verdichterstufen 4b durch den Kühlkanal 8 innerhalb des Rotors 12. Im Verdichterabschnitt besteht der Rotor 12 aus den Verdichterscheiben 17 mit den Verdicherschaufeln 23 und den Rotorzwischenscheiben 16. Durch eine Zufuhr des Fluids innerhalb des Rotors 12 kann auf Bohrungen in den Scheiben 10 zur Durchführung von Kühlkanälen 8 verzichtet werden, und ein ohnehin vorhandener Hohlraum im Inneren eines als Hohlwelle ausgebildeten Rotors 12 dazu genutzt werden. Dabei sind die Röhren 18 oder Bohrungen direkt mit dem Rotor 12 verbunden und führen das Fluid in den Hochtemperaturbereich 6.

Obwohl die Erfindung im Detail durch die bevorzugten Ausführungsbeispiele näher beschrieben wurde, so ist die Erfindung nicht auf die offenbarten Ausführungsbeispiele beschränkt und andere Variationen können vom Fachmann hieraus abgeleitet werden, ohne den Schutzumfang der Erfindung zu verlassen.

## Patentansprüche

1. Gasturbine mit einem Gehäuse (1), einer Brennkammer (2) sowie einem Verdichter (3),
wobei der Verdichter (3) und die Brennkammer (2) innerhalb des Gehäuses (1) angeordnet sind, und
wobei der Verdichter (3) mehrere Verdichterstufen (4a, 4b) umfasst,
wobei die in Strömungsrichtung eines Gases durch die Gasturbine hinteren Verdichterstufen (4b) einen Hochtemperaturbereich (6) des Verdichters (3) ausbilden,
**dadurch gekennzeichnet, dass**
Kühlmittel (5) vorhanden sind, welche zur Kühlung der hinteren Verdichterstufen (4b) ein Fluid von außerhalb des Gehäuses (1) in den Hochtemperaturbereich (6) des Verdichters (3) zuführen.

2. Gasturbine nach Anspruch 1,
**dadurch gekennzeichnet, dass**
die Kühlmittel (5) das Fluid sowohl dem Hochtemperaturbereich (6) des Verdichters (3) als auch der Brennkammer (2) oder einer der Brennkammer (2) nachgeschalteten Turbine (7) zuführen.

3. Gasturbine nach Anspruch 1 oder 2,
**dadurch gekennzeichnet, dass**
mindestens ein Kühlkanal (8) vorgesehen ist, welcher von einem in Strömungsrichtung eines Gases durch die Gasturbine hinter dem Verdichter (3) angeordneten Fluidraum (9) durch Ausnehmungen (11) in Scheiben (10) des Verdichters (3) verläuft.

4. Gasturbine nach Anspruch 1 oder 2,
**dadurch gekennzeichnet, dass**
der Verdichter (3) einen Rotor (12) umfasst,
wobei eine Zufuhr des Fluids zum Hochtemperaturbereich (6) durch einen Kühlkanal (8) innerhalb des Rotors (12) erfolgt.

5. Gasturbine nach Anspruch 3 oder 4,
**dadurch gekennzeichnet, dass**
die Zufuhr des Fluids in entgegengesetzter Richtung der Strömungsrichtung des Gases durch den Verdichter (3) erfolgt.

6. Gasturbine nach Anspruch 5,
**dadurch gekennzeichnet, dass**
ein Fördermittel (14) vorgesehen ist, welches das Fluid entgegen der Strömungsrichtung des Gases durch den Verdichter (3) in den Kühlkanal (8) der Kühlmittel (5) fördert.

7. Gasturbine nach Anspruch 6,
**dadurch gekennzeichnet, dass**
das Fördermittel (14) eine Scheibe (15) umfasst,
wobei ein Staudruck des durch den Verdichter (3) strömenden Gases an der Scheibe (15) das Fluid in den Kühlkanal (8) fördert.

8. Gasturbine nach Anspruch 6,
**dadurch gekennzeichnet, dass**
das Fördermittel (14) mindestens eine Rotorzwischenscheibe (16) umfasst,
wobei die Rotorzwischenscheibe (16) das Fluid verdichtet und in den Kühlkanal (8) fördert.

9. Gasturbine nach einem der vorhergehenden Ansprüche,
**dadurch gekennzeichnet, dass**
der Verdichter (3) Verdichterscheiben (17) aufweist, und dass der Kühlkanal (8) Röhren (18) umfasst,
wobei die Röhren (18) durch die Verdichterscheiben (17) der Verdichterstufe (4b) verlaufen.

10. Gasturbine nach Anspruch 9,
**dadurch gekennzeichnet, dass**
die Röhren (18) oder Bohrungen Austrittsöffnungen (19) aufweisen, durch die das Fluid in den Hochtemperaturbereich (6) des Verdichters (3) austritt.

11. Gasturbine nach einem der Ansprüche 9 oder 10,
**dadurch gekennzeichnet, dass**
die Verdichterscheiben (17) oder die Rotorzwischenscheiben (16) radiale Bohrungen (20) aufweisen.

12. Gasturbine nach Anspruch 11,
**dadurch gekennzeichnet, dass**
Fluid zwischen den Rotorzwischenscheiben (16) oder den Verdichterscheiben (17) geführt wird.

13. Gasturbine nach einem der vorhergehenden Ansprüche,
**dadurch gekennzeichnet, dass**
zur Kühlung einer Oberfläche der Rotorzwischenscheiben (16) oder der Verdichterscheiben (17) mindestens eine Austrittsöffnung (21) für das Fluid an der Rotorzwischenscheibe (16) oder in der Verdichterscheibe (17) vorgesehen ist.

14. Gasturbine nach Anspruch 13,
**dadurch gekennzeichnet, dass**
die Austrittsöffnung (21) auf eine Nut (22) für eine Verdichterschaufel (23) in der Verdichterscheibe (17) gerichtet ist.

15. Verfahren zur Kühlung einer Gasturbine mit einem Gehäuse (1), einer Brennkammer (2) sowie einem Verdichter (3), wobei der Verdichter (3) und die Brennkammer (2) innerhalb des Gehäuses (1) angeordnet sind, und
wobei der Verdichter (3) mehrere Verdichterstufen (4a, 4) umfasst,
wobei die in Strömungsrichtung eines Gases durch die Gasturbine hinteren Verdichterstufen (4b) einen Hochtemperaturbereich (6) des Verdichters (3) ausbildet,
**dadurch gekennzeichnet, dass**
zur Kühlung der hinteren Verdichterstufen (4b) ein Fluid von außerhalb des Gehäuses (1) in den Hochtemperaturbereich (6) des Verdichters (3) zugeführt wird.
